**Europäisches Patentamt**

**European Patent Office**

**Office européen des brevets**

(19)

(11) Veröffentlichungsnummer : **0 085 141**
**B1**

(12) **EUROPÄISCHE PATENTSCHRIFT**

(45) Veröffentlichungstag der Patentschrift :
28.05.86

(51) Int. Cl.⁴ : **B 65 G 33/06**

(21) Anmeldenummer : **82109714.4**

(22) Anmeldetag : **21.10.82**

(54) Vorrichtung zum Transport stabförmiger Werkstücke, insbesondere Nähmaschinennadel-Rohlinge.

(30) Priorität : 29.01.82 DE 3202920

(43) Veröffentlichungstag der Anmeldung :
10.08.83 Patentblatt 83/32

(45) Bekanntmachung des Hinweises auf die Patenterteilung : 28.05.86 Patentblatt 86/22

(84) Benannte Vertragsstaaten :
AT BE CH DE FR GB IT LI LU NL SE

(56) Entgegenhaltungen :
DE-B- 1 259 779
DE-C-   507 988
FR-A- 2 116 247
FR-A- 2 366 881
US-A- 1 953 257

(73) Patentinhaber : Rhein-Nadel Maschinennadel Gesellschaft mit beschränkter Haftung
Reichsweg 19-42
D-5100 Aachen (DE)

(72) Erfinder : Pavel, Klaus
In der Mühle 8
B-4732 Eynatten (BE)
Erfinder : Lange, Horst
Am Kupferofen 52
D-5100 Aachen (DE)

(74) Vertreter : Rieder, Hans-Joachim, Dr.
Corneliusstrasse 45 Postfach 11 04 51
D-5600 Wuppertal 11 (DE)

# Beschreibung

Die Erfindung betrifft eine Vorrichtung zum Transport stabförmiger Werkstücke, insbesondere Nähmaschinennadel-Rohlinge gemäß dem Oberbegriff des Hauptanspruches.

Es sind Vorrichtungen zum Transport von Werkstücken bekannt (US-A-1 953 257), bei denen die Werkstücke mittels zweier nebeneinander laufender Spindeln hochgefördert werden. Die Werkstücke werden dann anschließend auf eine Einzelspindel übergeben, welche im Endabschnitt des Werkstückes angreift und das andere freiliegende Ende wird dann weiter durch einen Ofen transportiert. Die Übergabe der Werkstücke von den Bunker-Spindeln zur Ofen-Spindel erfolgt über Rollbleche. Diese ungenaue Übergabe macht es unmöglich, eine solche Einrichtung einzusetzen, um Werkstücke, insbesondere kleine Werkstücke, durch ein Folgewerkzeug zu führen. Dies gilt insbesondere dann, wenn man die für eine solche Folgewerkzeug-Bearbeitung notwendigen Haltepositionen in an sich bekannter Weise erreichen will durch steigungslose Abschnitte der Spindel.

Weiterhin ist aus der FR-A-2 116 247 eine Transporteinrichtung mit Gewindespindel bekannt. Die Gewindespindel besitzt ebenfalls einen steigungslosen Abschnitt des Gewindeganges, auf dem das transportierte Werkstück, vorzugsweise eine Flasche, stehenbleibt.

Aufgabe der Erfindung ist es, eine Übergabe zu verwirklichen, die es gestattet, die Transportvorrichtung unter gleichzeitiger Benutzung der an sich bekannten steigungslosen Abschnitte einzusetzen zum Transport von Werkstücken durch ein Folgewerkzeug.

Gelöst wird diese Aufgabe durch die im, in bezug auf die US-A-1 953 257 abgegrenzten, Anspruch 1 angegebene Erfindung.

Zufolge derartiger Ausgestaltung ist eine gattungsgemäße Vorrichtung von erhöhtem Gebrauchswert geschaffen. Die sich über die Länge des Folgewerkzeugs erstreckenden Transportspindeln brauchen ihre Drehbewegung nicht zu unterbrechen. Dennoch ist über den steigungslosen Abschnitt der Transportspindeln an den Haltepositionen erreicht, daß die Werkstücke einen bestimmten Zeitabschnitt in ihrer Lage verharren, um dort die entsprechenden Bearbeitungen vornehmen zu können. Verläßt der steigungslose Abschnitt den ihm zugewendeten Bereich der Werkstücke, findet das Weiterfördern derselben statt. Die ununterbrochene Drehbewegung der Transportspindeln führt ferner zu einer erhöhten Leistung der Vorrichtung. Außerdem kann der Aufbau der Vorrichtung weniger aufwendig gestaltet sein, da entsprechende, das Stillsetzen und Ingangsetzen der Transportvorrichtung steuernde Bauteile entfallen. Es ist verständlich, daß die Gewindegänge dem Werkstück angepaßt sein müssen, so daß das Werkstück in die entsprechende formschlüssige Einlage gelangt.

Eine vorteilhafte Weiterbildung ist darin zu sehen, zwei nebeneinanderliegend verlaufende, und sich gegenläufig zueinander synchron drehende Transportspindeln vorzusehen. Dies führt zu dem Vorteil einer ausreichenden Fixierung der Werkstücke, so daß ein Verkanten derselben ausgeschlossen ist. Die Synchronität schließt auch die steigungslosen Abschnitte mit ein. Das bedeutet, daß an den Haltepositionen die entsprechenden Abschnitte des Werkstücks in den steigungslosen Abschnitten der Transportspindeln einliegen. Darüber hinaus besteht ein vorteilhaftes Merkmal noch darin, daß die Gewindegänge der Transportspindeln in entgegengesetzter Steigung verlaufende Gewindegänge besitzen. Die unterschiedliche Steigung der Transportspindeln gestattet die Gegenläufigkeit. Diese führt dazu, daß die Werkstücke bei ihrem Transport in Richtung der Gleitkufen belastet werden, so daß sie nicht ungewollt die Transportebene verlassen. Weiterhin gestattet die stirnendseitige Mitnahme der Werkstücke, daß neben dem mittleren Bereich auch weitgehend die endständigen Abschnitte der Werkstücke an einer Halteposition bearbeitet werden können. Bei einander überlappender Anordnung solcher Transportspindeln, die die Werkstücke zwischen sich mitnehmen, und Transportspindeln, auf denen die Werkstücke aufliegen, liegt ein entsprechender Höhenversatz zwischen den Transportspindelpaaren vor.

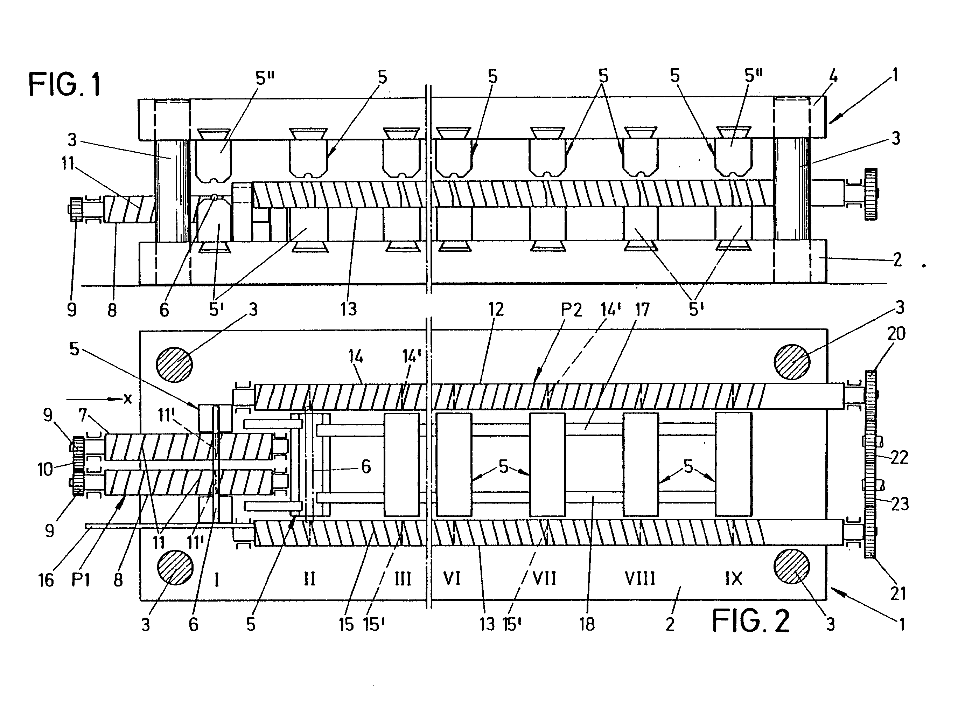

Nachstehend wird ein Ausführungsbeispiel der Erfindung anhand der Fig. 1 bis 10 erläutert. Es zeigt

Figur 1 in schematisierter Darstellung eine Seitenansicht eines mit der Vorrichtung ausgestatteten Folgewerkzeugs,

Figur 2 einen Horizontalschnitt durch das Folgewerkzeug dicht oberhalb der Transportspindeln,

Figur 3 in vergrößerter Darstellung eine Seitenansicht einer Transportspindel im Bereich einer Halteposition, welche Transportspindel mit dem einen Stirnende des Werkstücks in Eingriff steht,

Figur 4 eine Draufsicht auf Fig. 3,

Figur 5 einen Querschnitt durch die einlaufseitigen Transportspindeln,

Figur 6 einen Querschnitt durch die die einlaufseitigen Transportspindeln überlappenden Transportspindeln und

Figuren 7-10 in Ansicht und Seitenansicht einige Stadien des Werkstücks zwecks Herstellung von Nähmaschinennadeln aus Nähmaschinennadel-Rohlingen.

Das zur Herstellung von Nähmaschinennadeln geeignete Folgewerkzeug besitzt ein Säulengestell 1. Dieses weist eine untere ortsfeste Platte 2 von rechteckigem Grundriß auf. Eckseitig gehen von der Platte 2 aufwärts gerichtete Säulen 3 zur Führung einer oberen Platte 4 aus, welche über nicht dargestellte Einspannzapfen mit einer Presse verbunden ist.

Zwischen den Säulen 3 sind mit gleichem Abstand hintereinanderliegend an den Positionen I bis IX Werkzeuge 5 angeordnet. Jedes Werkzeug 5 setzt sich aus einem Unter- und Oberwerkzeug 5', 5" zusammen, welche in geeigneter Weise an den Platten 2 bzw. 4 gehaltert sind. Die Werkzeuge 5 sind so ausgerichtet, daß sie parallel zur kürzeren Seite der Platten 2, 4 verlaufen.

Die in Form von Nähmaschinennadel-Rohlingen 6 ausgebildeten Werkstücke durchlaufen das Folgewerkzeug in Pfeilrichtung x. Zum Transport der Nähmaschinennadel-Rohlinge 6 dienen zwei Paare P 1 und P 2 von Transportspindeln, wobei das Paar P 1 einlaufseitig angeordnet ist.

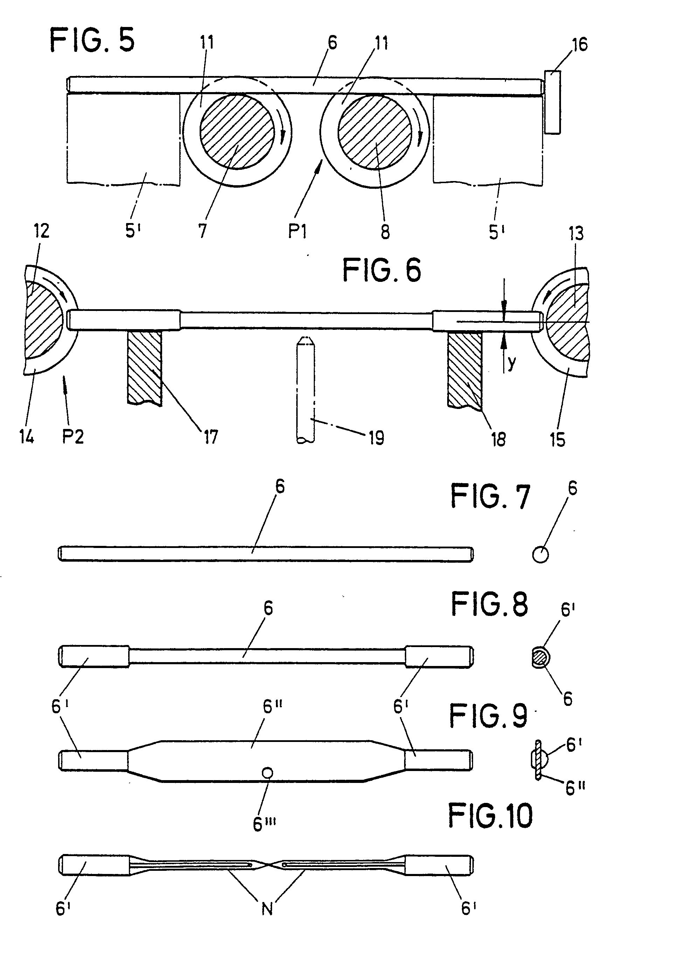

Das Paar P 1 setzt sich aus zwei nebeneinanderliegend verlaufenden, synchron zueinander angetriebenen Transportspindeln 7 und 8 zusammen. Auf dem einlaufseitigen Ende der Transportspindeln 7, 8 sitzen verzahnte Stirnräder 9, die über ein Zwischenrad 10 in Eingriff stehen. Hierdurch ist gewährleistet, daß die Transportspindeln 7, 8, wie in Fig. 5 herausgestellt ist, im Uhrzeigersinn angetrieben werden, und zwar von der Einlaufseite her gesehen. Damit das Werkstück 6 in Pfeilrichtung x bei einem solchen Drehsinn bewegt wird, sind die Transportspindeln 7, 8 mit einem linksgängigen Trapezgewinde 11 versehen. Das Werkstück 6 tritt mit seinem mittleren Bereich in formschlüssige Einlage zu den Gewindegängen dieser Transportspindeln 7, 8. Um einen Stillstand des Werkstücks 6 an der Halteposition I zu erzielen, ist der Gewindegangabschnitt im Bereich der Halteposition I über einen der Haltezeit angepaßten Winkelbereich durch einen steigungslosen Abschnitt 11' unterbrochen. Sobald das Werkstück diesen steigungslosen Abschnitt 11' erreicht, findet demgemäß kein Transport des Werkstückes 6 statt. Der steigungslose Abschnitt 11' erstreckt sich beim vorliegenden Ausführungsbeispiel über einen Winkelbereich von ca. 180°.

An der Halteposition I findet die Bearbeitung der die Transportspindeln überragenden Endabschnitte statt, und zwar werden dort von dem Unterwerkzeug 5' und dem Oberwerkzeug 5" durch Flachpressen erzielte Nähmaschinennadelkolben 6' erzeugt.

Den einlaufseitigen Transportspindeln 7, 8 sind in überlappender Anordnung die das Paar P 2 bildenden Transportspindeln 12, 13 nachgeordnet. Letztere tragen auf ihrem die Auslaufseite des Folgewerkzeugs überragenden Ende verzahnte Stirnräder 20 bzw. 21, die über Zwischenräder 22, 23 gegenläufig zueinander angetrieben werden. Die Transportspindel 12 läuft im Uhrzeigersinn und die Transportspindel 13 entgegen Uhrzeigersinn um. Damit die Nähmaschinennadel-Rohlinge 6 in Pfeilrichtung x bewegt werden, weist die Transportspindel 12 ein linksgängiges Trapezgewinde und die Transportspindel 13 ein rechtsgängiges Trapezgewinde auf. Die Überlappung der Transportspindeln 7, 8 und 12, 13 findet im Bereich zwischen den Haltepositionen I und II statt. Es ist ein solcher Abstand zwischen den Transportspindeln 12 und 13 gewählt, daß dieser etwas kleiner ist als die Länge der Nähmaschinennadel-Rohlinge 6. Ferner liegt die Achse der Transportspindeln 12, 13 höher als diejenige der Transportspindeln 7, 8 so daß die auf den Transportspindeln 7, 8 aufliegend geförderten Werkstücke 6 in die radiale Position zu den Gewindegängen 14, 15 der Transportspindeln 12 bzw. 13 gelangen. Eine sichere Übergabe der Werkstücke 6 ist durch eine parallel zur Transportspindel 8 verlaufende Führungsleiste 16 gewährleistet. Dieselbe erstreckt sich bis zur Einlaufseite der Transportspindel 15 derart, daß die Führungsfläche auf Höhe des Kerndurchmessers der Transportspindel 13 liegt. Zufolge der Drehrichtung der Transportspindeln 7, 8 ist gewährleistet, daß die Werkstücke stets gegen die Führungsleiste 16 gedrückt werden.

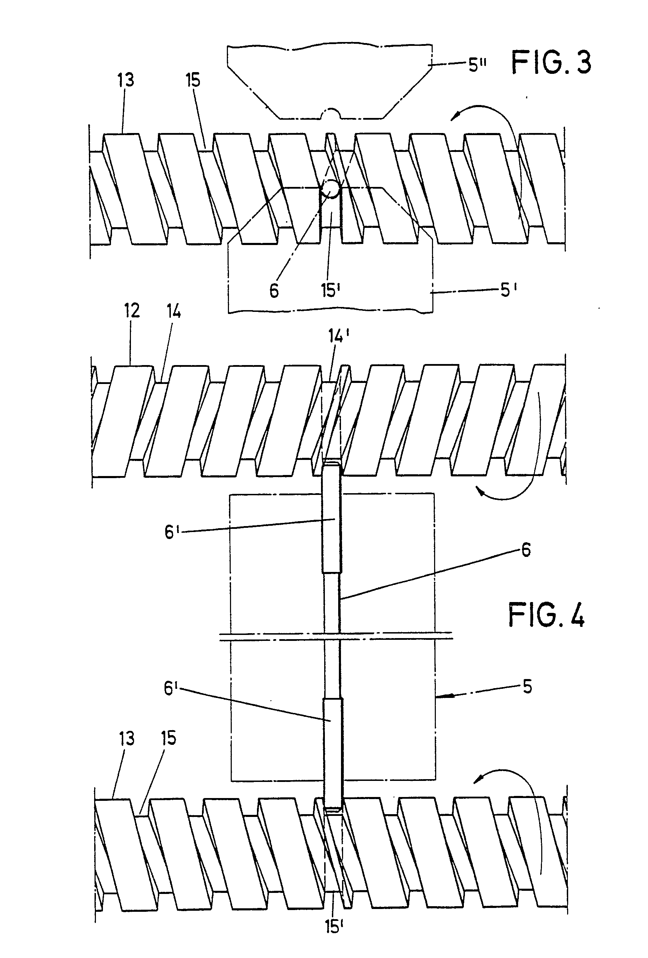

Die Gewindegangabschnitte beider Transportspindeln 12, 13 weisen im Bereich der Halteposition II bis IX, also an den Bearbeitungsstellen, ebenfalls einen der Haltezeit angepaßten steigungslosen Abschnitt 14' bzw. 15' auf. Auch dieser erstreckt sich über einen Bereich von 180°, wie insbesondere die Fig. 3 und 4 veranschaulichen. Damit die mit ihren Stirnenden in Eingriff mit den Gewindegängen 14, 15 stehenden Werkstücke 6 nicht aus ihrer Transportebene gelangen, sind zwischen den Transportspindeln 12, 13 parallel zueinander angeordnete Gleitkufen 17, 18 vorgesehen, die sich zwischen den unteren Werkzeugen 5' der einzelnen Haltepositionen I bis IX erstrecken. Die gegenläufige Drehrichtung der Transportspindeln 12, 13 sorgt dafür, daß die Werkstücke 6 in Richtung der Gleitkufen 17, 18 gedrückt werden, so daß zusätzliche Fixiermaßnahmen für die Werkstücke 6 nicht erforderlich sind. Fig. 6 veranschaulicht, daß die Gleitebene der Gleitkufen 17, 18 um den Radius y des Werkstücks 6 unterhalb der durch die Transportspindelachse gelegten Ebene verläuft.

Die im einzelnen nicht dargestellten Werkzeuge sind so beschaffen, daß zum Beispiel an der Halteposition II das Flachpressen des Schaftbereichs 6" vorgenommen wird, vergl. Fig. 9. Gegebenenfalls kann dort der Schaftbereich 6" mit einer Lochung 6"' versehen werden, welche den Einsatz eines in Fig. 6 strichpunktiert veranschaulichten Positionierstiftes 19 gestattet.

An der Position IX erfolgt dann der letzte Arbeitsgang, so daß aus dem einlaufseitigen Nähmaschinennadel-Rohling 6 zwei fertige Nähmaschinennadeln N entstehen, vergl. Fig. 10.

Sollte durch die Werkzeuge 5 an den Haltepositionen eine geringfügige Verlängerung des Werkstücks auftreten, so kann diesem dadurch begegnet werden, daß die Transportspindeln 12, 13 in den entsprechenden Bereichen eine größere Gewindetiefe erhalten.

Anstatt wie dargestellt ist, könnten auch die Transportspindeln 12, 13 einen geringeren Abstand zueinander einnehmen. Dann können die einlaufseitigen Spindeln 7, 8 und die Transportspindeln 12, 13 auf gleicher Höhe angeordnet werden. Es ist dann jedoch nicht möglich, den mittleren Bereich der Nähmaschinennadel-Rohlinge zwischen diesen Transportspindeln weitgehend bis zum Stirnende zu bearbeiten.

## Patentansprüche

1. Vorrichtung zum Transport stabförmiger Werkstücke (6), insbesondere Nähmaschinennadel-Rohlinge, längs einer Werkstück-Bearbeitungsstrecke, bei welcher die Werkstücke (6) in formschlüssiger Einlage zu den Gewindegängen (14, 15) mehrerer sich über die Länge des Transportweges erstreckender Transportspindeln (7, 8, 12, 13) angeordnet sind und in Richtung des Transportweges von Spindel zu Spindel übergeben werden derart, daß die Werkstücke (6) über einen Teilabschnitt des Transportweges mit ihrem Mittelabschnitt und über einen anderen Teilabschnitt des Transportweges mit ihrem Endabschnitt in die Gewindegänge (14, 15) eingreifen, dadurch gekennzeichnet, daß die Endabschnitte der im Mittelbereich mit steigungslosen Gewindegangabschnitten (14', 15') ausgestatteten Transportspindeln (7, 8, 12, 13) zueinander überlappend verlaufen derart, daß jedes Werkstück (6) während des Transportes im Überlappungsbereich sowohl durch Eingriff seines Mittelbereiches als auch durch Eingriff seines Endbereiches gewindegeführt ist.

2. Vorrichtung nach Anspruch 1, dadurch gekennzeichnet, daß die im Mittelabschnitt angreifenden Transportspindeln (7, 8) zwischen zwei nebeneinanderliegend verlaufenden und sich gegenläufig zueinander synchron drehenden Transportspindeln (12, 13), die in entgegengesetzter Steigung verlaufende Gewindegänge (14, 15) besitzen, ragen.

3. Vorrichtung nach den Ansprüchen 1 und 2, dadurch gekennzeichnet, daß die Werkstücke (6) mit ihren Stirnenden in Eingriff stehen und zwischen den Transportspindeln (12, 13) unterhalb der durch die Transportspindelachse gelegten Ebene Gleitkufen (17, 18) angeordnet sind, deren Gleitebene etwa um den Radius (y) unterhalb des Werkstücks (6) verläuft.

## Claims

1. A mechanism for the conveyance of workpieces (6) in the form of rods, in particular blanks for sewing-machine needles, along a workpiece processing line, in which the workpieces (6) are arranged to lie with a close fit in the threads (14, 15) of a number of conveyor spindles (7, 8, 12, 13) extending along the length of the path of conveyance and get handed on from spindle to spindle in the direction of the path of conveyance in such a way that the workpieces (6) along one portion of the path of conveyance engage by their middle section and along another portion of the path of conveyance engage by their end sections in threads (14, 15), characterized in that the end portions of the conveyor spindles (7, 8, 12, 13) which are equipped in the middle region with portions of thread (14', 15') having zero pitch, run overlapping one another in such a way that each workpiece (6) during conveyance in the range of overlap is carried by thread both through engagement of its middle region and through engagement of its end regions.

2. A mechanism as in claim 1, characterized in that the conveyor spindles (7, 8) which engage in the middle section project between two conveyor spindles (12, 13) which run lying side by side and turn in synchronism with one another in opposite directions and which have threads (14, 15) running at opposite pitch.

3. A mechanism as in claims 1 and 2, characterized in that the workpieces (6) engage by their tips and between the conveyor spindles (12, 13) and below the plane passing through the axes of the conveyor spindles there are arranged skids (17, 18) the plane of slide of which runs below workpiece (6) substantially about the radius (y).

## Revendications

1. Dispositif pour le transport de pièces en forme de tiges (6), notamment des ébauches d'aiguilles pour machines à coudre, le long d'une ligne d'usinage de pièces, dans lequel les pièces (6) sont disposées dans une condition d'entraînement par conjugaison de formes par rapport aux filetages (14, 15) de plusieurs broches de transport (7, 8 ; 12, 13) s'étendant sur la longueur de la ligne de transport et sont transférées d'une broche à une autre dans la direction de la ligne de transport de telle sorte que les pièces (6) entrent en prise avec les filetages (14, 15), par leur partie centrale sur un tronçon partiel de la ligne de transport et par leur partie extrême sur un autre tronçon partiel de la ligne de transport, caractérisé en ce que les tronçons extrêmes des broches de transport (7, 8 ; 12, 13), pourvus dans une zone centrale de tronçons de filetage à pente nulle (14', 15') sont disposés en position de chevauchement mutuel de telle sorte que chaque pièce (6), pendant le transport dans la zone de chevauchement, soit guidée par filetage aussi bien par engagement de sa zone centrale que par engagement de sa zone extrême.

2. Dispositif selon la revendication 1, caractérisé en ce que les broches de transport (7, 8) en prise avec la zone centrale présentent une partie s'étendant entre deux broches de transport (12, 13), disposées l'une à côté de l'autre et tournant, de façon synchronisée en sens inverse l'une de l'autre et qui comportent des filetages (14, 15) pourvus d'une pente opposée.

3. Dispositif selon les revendications 1 et 2, caractérisé en ce que les pièces (6) sont en prise avec leurs extrémités frontales et en ce qu'il est prévu, entre les broches de transport (12, 13), endessous du plan passant par l'axe de celles-ci, des patins de glissement (17, 18) dont le plan de glissement s'étend en dessous et à approximativement un rayon (y) de la pièce (6).

FIG.1

5" 5 5 5 5 5 5" 4 1

3
11
9 8 6 5' 3 13 12 P2 14' 17 5' 2

5
x
11'
9 7
10
9
16 P1 8
11 11'
3 6 5
I II III VI VII VIII IX
6
5 5
14 14'
15 15'
13 15' 18
3
20
22
23
21
2 FIG.2 3 1

0 085 141

FIG. 3

FIG. 4

FIG. 5

FIG. 6

FIG. 7

FIG.8

FIG.9

FIG.10